# EUROPEAN PATENT APPLICATION

(11) **EP 2 112 495 A2**
(43) Date of publication of application: **28.10.2009**
(21) Application number: 09158556.2
(22) Date of filing: 23.04.2009
(51) Int. Cl.: G01M 17/00

(54) **Diagnostic data mining for vehicles**

(30) Priority: 23.04.2008 US 108072
(71) Applicant: SPX Corporation, Charlotte, NC 28277 (US)
(72) Inventor: Underdal, Olay M., Kalamazoo, MI 49009 (US); Gilbert, Harry M., Portage, MI 49024 (US); Portyanko, Oleksiy, Kalamazoo, MI 49009 (US); Mayes, Randy L., Otsego, MI 49078 (US); Fountain, Gregory J., Kalamazoo, MI 490047 (US); Wittliff, III, William W., Gobles, MI 49055 (US)
(74) Representative: Nguyen Van Yen, Christian

(57) **Abstract**

A diagnostic system for a vehicle, includes a memory receiving and storing vehicle specific information, and storing diagnostic test sequences a processor connected to the memory, executing instructions for the diagnostic test sequences and outputting the results of the execution, and a centralized database, remote from the memory, storing the results of the execution of the diagnostic test sequences and results of the execution of diagnostic tests from additional vehicles, configurable for extraction and linking of the data stored in the centralized database.

## Description

### TECHNICAL FIELD

The present disclosure relates generally to diagnostic equipment and method thereof. More particularly, the present disclosure relates to a data mining of information generated by the diagnostic equipment.

### BACKGROUND OF THE DISCLOSURE

Onboard control computers have become prevalent in motor vehicles, but as safety, economy, and emissions requirements have continued to tighten, vehicle systems and devices have not met the requirements set out in government regulations and the implicit demands of competitors' achievements. Successive generations of onboard control computers have acquired increasing data sensing and retention capability as the electronics have advanced.

Present external diagnostic and display apparatus, known as diagnostic tools, are commonly limited to reporting the data acquired by the onboard control computer itself. Increasingly, subtle subsystem failures in vehicles overload the ability of maintenance technicians, not simply to read the faults detected and stored by the diagnostic tools themselves, but to combine those readings with peripheral measurements and deduce corrective actions with both speed and accuracy.

Currently in the automotive industry, there are both stand alone and hand-held diagnostic testers or tools used in connection with motor vehicle maintenance and repair. For example, hand-held diagnostic tools have been used to trouble-shoot faults associated with vehicular control units. Diagnostic tools can detect faults based on Diagnostic Trouble Codes or DTCs that are set in the vehicle's onboard control computer. A DTC can be triggered and stored when there is a problem with the vehicle. A technician then retrieves the DTC using a diagnostic tool, repairs the associated problem and then deletes the DTC from the vehicle's computer.

Including and beyond diagnostic trouble codes, in general, diagnostic systems are used by technicians and professionals in virtually all industries to perform basic and advanced system testing functions. For example, in the automotive, trucking, heavy equipment and aircraft industries, diagnostic test systems provide for vehicle onboard computer fault or trouble code display as mentioned above, interactive diagnostics, multiscope and multimeter functions, and electronic service manuals. In the medical industry, diagnostic systems provide for monitoring body functions and diagnosis of medical conditions, as well as system diagnostics to detect anomalies in the medical equipment.

In many industries, diagnostic systems play an increasingly important role in manufacturing processes, as well as in maintenance and repair throughout the lifetime of the equipment or product. Some diagnostic systems are based on personal computer technology and feature user-friendly, menu-driven diagnostic applications. These systems assist technicians and professionals at all levels in performing system diagnostics on a real-time basis.

A typical diagnostic system includes a display on which instructions for diagnostic procedures are displayed. The system also includes a system interface that allows the operator to view real-time operational feedback and diagnostic information. Thus, the operator may view, for example, vehicle engine speed in revolutions per minute, or battery voltage during start cranking; or a patient's heartbeat rate or blood pressure. With such a system, a relatively inexperienced operator may perform advanced diagnostic procedures and diagnose complex operational or medical problems.

The diagnostic procedures for diagnostic systems of this sort are typically developed by experienced technical experts or professionals. The technical expert or professional provides the technical experience and knowledge required to develop complex diagnostic procedures. Thus, the efficacy of the diagnostic procedures, in particular the sequence in which the diagnostic procedures are performed, is highly dependent on the expertise of the technical expert or professional authoring the procedures.

When diagnostic tests are performed, a user receives information and the information is kept in the diagnostic tool for the specific purpose of diagnosis. The information generated is static in the tool, and is not further utilized. There is a need to utilize the vast information that a diagnostic tool generates for analysis and to increase the efficiency of the diagnostic tool and the activities surrounding diagnosing a vehicle.

### SUMMARY OF THE DISCLOSURE

The foregoing needs are met, to a great extent, by the present disclosure, wherein one aspect a technique and apparatus are provided that will allow a technician to use a diagnostic system that provides a database for storage of information generated by the diagnostic tool, configurable for mining of the data.

In an aspect of the present disclosure, A diagnostic system for a vehicle, including a memory receiving and storing vehicle specific information, and storing diagnostic test sequences, a processor connected to the memory, executing instructions for the diagnostic test sequences and outputting the results of the execution, and a centralized database, remote from the memory, storing the results of the execution of the diagnostic test sequences and results of the execution of diagnostic tests from additional vehicles, configurable for extraction and linking of the data stored in the centralized database.

The diagnostic system can also include a second processor remote from the first processor analyzing the data stored on the database. The diagnostic system can also include a repair facility sending information for storage on the centralized database. The diagnostic system can also include storing information related to the diagnostic test sequences on the centralized database. The diagnostic system can also include storing information related to the diagnostic test sequences on the centralized database, where the related information being vehicle identity, geographical location of the operation of the vehicle, and maintenance history of the vehicle. The diagnostic system can also include the centralized database receiving facility location from the processor.

The diagnostic system can also include a second processor executing a plurality of instructions determining the correlation between the information received in the centralized database from the processor and writing links between the information stored on the centralized database. The diagnostic system can also include a display device displaying the information stored on the database.

In another aspect of the disclosure, a vehicle diagnostics, can include receiving and storing vehicle specific information, and storing diagnostic test sequences in a memory, executing instructions for the diagnostic test sequences and outputting the results of the execution, by a processor connected to the memory, and storing, in a centralized database remote from the memory, the results of the execution of the diagnostic test sequences and results of the execution of diagnostic tests from additional vehicles, configurable for extraction and linking of the data stored in the centralized database.

In another aspect of the invention, a vehicle diagnostics system, includes a means receiving and storing vehicle specific information, and storing diagnostic test sequences, a means for a processor connected to the storing means, executing instructions for the diagnostic test sequences and outputting the results of the execution, and a means for a centralized database, remote from the storing means, storing the results of the execution of the diagnostic test sequences and results of the execution of diagnostic tests from additional vehicles, configurable for extraction and linking of the data stored in the centralized database.

There has thus been outlined, rather broadly, certain embodiments of the disclosure in order that the detailed description thereof herein may be better understood, and in order that the present contribution to the art may be better appreciated. There are, of course, additional embodiments of the disclosure that will be described below and which will form the subject matter of the claims appended hereto.

In this respect, before explaining at least one embodiment of the disclosure in detail, it is to be understood that the disclosure is not limited in its application to the details of construction and to the arrangements of the components set forth in the following description or illustrated in the drawings. The disclosure is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present disclosure. It is important, therefore, that the claims be regarded as including such equivalent constructions insofar as they do not depart from the spirit and scope of the present disclosure.

### BRIEF DESCRIPTION OF THE DRAWINGS

FIG. 1 is a diagram of a diagnostic system with the information stored on a data repository.

FIG. 2 is a diagram of the diagnostic system storing the information into a remote database.

FIG. 3 is another diagram showing the different databases that can used and connected for storage of the information.

FIG. 4 is a block diagram of the computer of FIG. 1.

FIG. 5 is a block diagram of the components of the diagnostic tool of FIG. 1.

### DETAILED DESCRIPTION

The disclosure will now be described with reference to the drawing figures, in which like reference numerals refer to like parts throughout. An embodiment in accordance with the present disclosure provides an apparatus and method that will allow a user, such as a technician, to use a computer or diagnostic equipment to generate a database of information that can be mined for relevant information. The mined information can be used for a variety of purposes including, for example, authoring diagnostic tests for a diagnostic tool or personal computer.

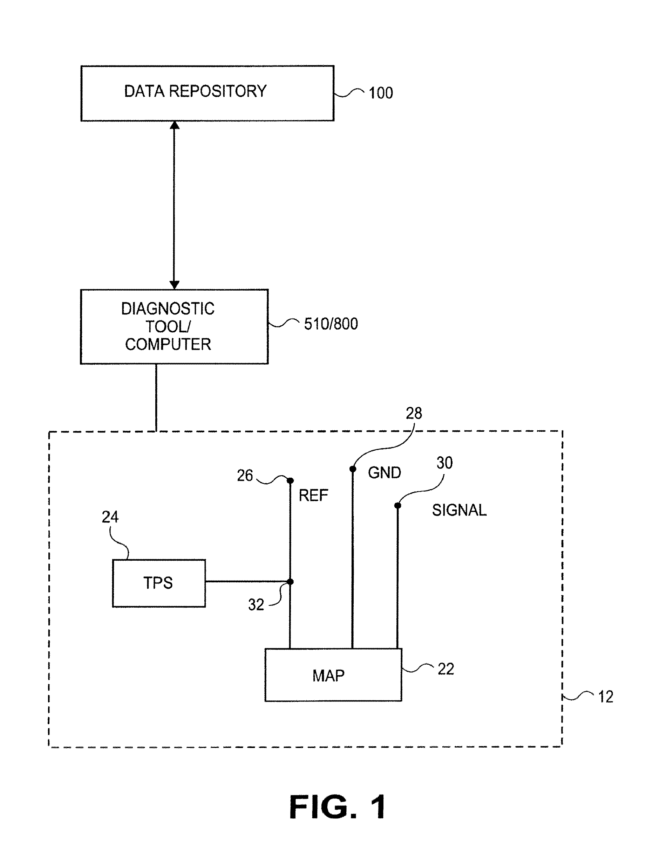

Referring to FIGS. 1-3, the completion of a diagnostic sequence will typically identify a failed component. For example, a failed component can include an alternator, voltage regulator, etc. A record of the failure of these components, as well as the time, geographical location, vehicle 12 identity, and other specific information can be captured at the end of a diagnostic (be consistent) sequence and cached with other such captured data. The data can be cached on a memory unit of a diagnostic tool 510 or computer 800 for transfer to a data repository 100 or it can be stored directly in the data repository 100. This cached data can be pooled at a central facility, such as the data repository 100, and mined for statistically significant information. The output of this data mining can lead to improved manufacture, diagnosis and repair of components and the systems to which they belong.

At the completion of a diagnostic sequence, a specific failure mode for a specific component is identified, and often a specific repair procedure is recommended by the diagnostic tool. Each failure mode and component pair can be stored in a cache of results in the centralized data repository 100, along with related information, such as recommended repair, vehicle identity, facility location, time, date, etc.

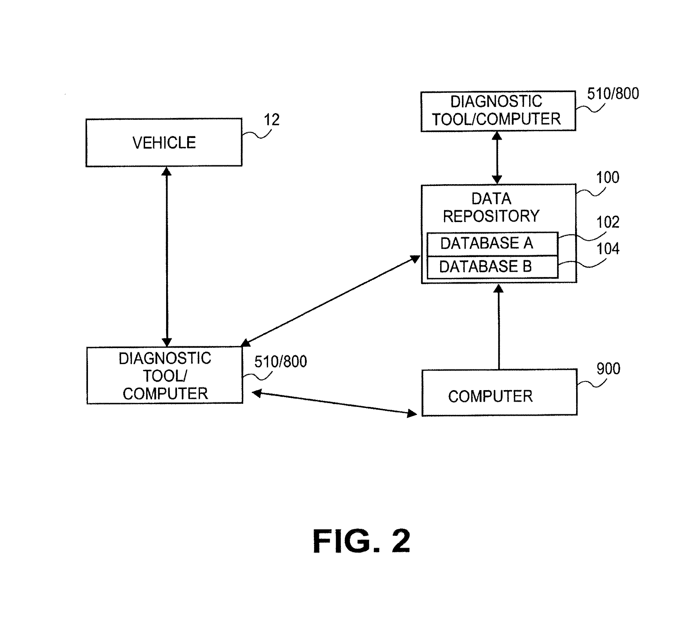

Referring to FIG. 2, the centralized data repository 100 can be divided into a plurality of separate databases 102 and 104. The different databases can included different types information that are linked with each other. Alternatively, the centralized data repository 100 can be a single database with the test data and related information.

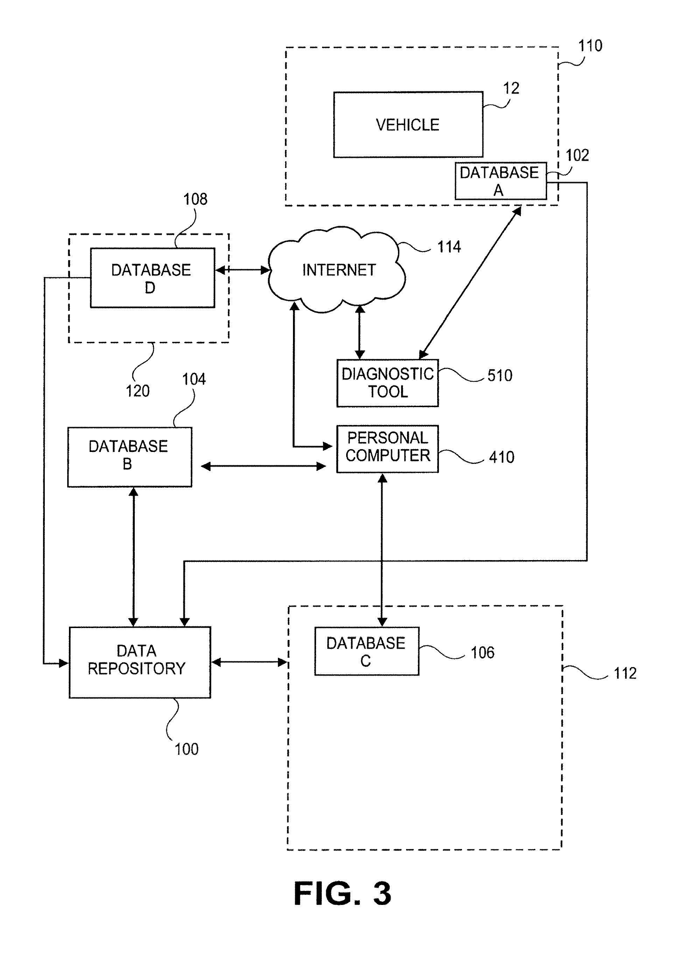

Referring to FIG. 3, the databases A through D 102-108 can be remotely located and the information can then be centralized from the databases 102-108 to the data repository 100. The transfer of data can be performed directly through a wire or wirelessly connection or through a network.

The cache of information can be added to a pool of such information maintained at the data repository 100. As this pool grows, data mining operations can be performed to search for meaningful statistical relationships. For example, certain failure mode component pairs can become statistically significant, possibility in differing rates as related to the other pooled data, such as facility location, vehicle identity, etc.

Referring to FIG. 2, a computer 900 can be used to analyze or mine the information in the data repository 100 to determine the relationship of the information stored. The information can be stored with a plurality of data fields. For example, a test data result of a diagnostic sequence can include the data fields of the location of the vehicle, or the related information of the location can be a separate data entry that is linked to the test result. A variety of data links can be included in order to help correlate and organize the information in the data repository.

This information stored in the data repository 100 can in turn be re-associated with the diagnostic sequences stored on the diagnostic tool 510 or computer 800, in order to provide enhanced decision-making capabilities by the diagnostic system and the technician. Further, as seen in FIGS. 2 and 3, the data repository 100 can also be a plurality of databases or partitions.

Therefore, as seen FIGS. 1-3, there can a centralized data repository 100 that holds all the information. Alternatively, there can also be a plurality databases 102-108, that however, do not link to a centralized repository 100, but communicate with each other to create a virtual centralized repository.

Within the data received from the diagnostic testing and stored on the repository 100, there can be information about, make, model, region of the vehicle 12. Additionally, there can be the age of vehicle 12 and the failure mode included. Within the database there can be a link with one field of data with another. Alternatively, the link between the different data can be generated when the computer 900 analyzes the information on the repository 100.

For example, there can be a link between the failure mode and the region of the country for a particular vehicle. That is, if there is a 2003 FORD TAURUS, in the region of Denver, Colorado, the typical failure can be a map sensor 22. An analysis can show a trend of the map sensor 22 showing failure only for Denver, Colorado, through a map sensor code that is generated by the vehicle. The symptoms are tied in like through the DTC or verbal symptoms.

Referring to FIG. 1, one can link the DTC for the MAP and DTC for TPS as seen in the circuit diagram in the vehicle 12. For example, if there is a circuit with reference wire 26, ground wire 28, signal wire 30, connected to the node 32, which then splits to the TPS (throttle position sensor), and to the MAP (manifold absolute pressure) sensor. Then, the ground 28 and signal wire 30 goes to the MAP sensor 22. If there is both a DTC for the MAP sensor 22 and DTC for TPS sensor 24, being set, then the cause of failure can be something in the line, so something in common. Here, as seen in FIG. 1, using the wiring diagram to determine the cause of the failure, it can be seen that there is a common node 32 between the TPS sensor 24 and MAP sensor 22. The circuit diagram shows the common connection, and this information can be in the data repository 100, to provide the link of the test result, or the test result themselves show that a certain failure would trigger DTC, for both the MAP and TPS sensors 22 and 24. The test result information can be used to show the connection even without the circuit diagram, thus creating an added intelligence for the technician frrm the information in the data repository 100. That is, the first item that a technician may want to check if both are triggered would be obtained from the information in data repository 100. Therefore, the data that is stored in the repository 100 helps in getting this information.

The information can be cached in a memory before final storage or stored in the data repository 100 directly from the diagnostic tool 510 or computer 800. There is extraction of the data from the data repository through either the diagnostic tool 510 or computer 800 or through a secondary computer 900 that is used for extracting and analyzing the data.

In another example, there can be DODGE NEON, wherein a service manual recommends the timing belt be replaced at 100,000 miles. However, in this example, the data that is accumulated by a computer 800 or diagnostic tool 510 and stored on the data depository 100, has user of the DODGE NEON having reached 120,000 miles, maintenance records showing that no timing belt was changed, and also data showing that the vehicle 12 will not run and that the vehicle 12 quit on the highway. All this information is deposited in the data repository 100, which can be referenced and linked in a certain manner to obtain the relationship between the information. So, then with the information in the data repository 100, one can create artificial intelligence to inform the check the timing belt. Therefore, the tool 510 is thinking like a technician and no longer just a tool. The information can be fed back into the diagnostic tool 510 or computer 800, directly from the data repository 100 or through a computer 900.

A plurality of vehicles can be tested and information fed to the data repository 100, and then the accumulated data from different vehicles and diagnostic tools and computers diagnosing the vehicles can be returned to the diagnostic tool or computer performing the diagnosis in an organized and linked format that can see trends and significance of the information deposited on the repository 100.

Referring back to FIG. 2, a vehicle 12 can be connected to a diagnostic tool 510 or computer 800 for executing a plurality of diagnostic sequences. The diagnostic tool 510 and computer 800, when performing diagnostic sequences, will then output a plurality of information including the results of the diagnostic sequences. The information outputted from the diagnostic tool 510 and/or computer 800 is transferred to the database A 102 or database B in data repository 100. The database 102, 104 stores all the information generated by the diagnostic tool 510 or computer 800. The information on the database can be re-associated back to the diagnostic tool/computer 510, 800 from the database A 102 or database B 104 from the repository 100.

Additionally, a second computer 900 can be used to analyze the information on the database A 102, including executing and resulting in a statistical analysis of the databases in the data repository 100. Further, the computer 900 can be used to re-associate the information on the database A back into the diagnostic tool/computer 510, 800 or the information stored on the data repository 100 can be directly accessed by the diagnostic tool 510 or computer 800. Additionally, the repository 100 stores and includes information extracted from a plurality of other diagnostic tools or computers, such as diagnostic tool 1510 and computer 1800.

Referring to FIG. 3, a database 102 (database A) having the information can be maintained separately at a repair facility 110. The database is not limited to being located at the repair facility 110, as it can be at any location where the diagnostic tests are performed, or the database can be remotely located at the manufacturer's facility or third party vendor facility 112 as seen in database C 106. The database with the diagnostic results can also be on an independent server 120 connected to the Internet 114, as seen for example on database D 108. As seen in database B 104, the database with diagnostic results can be on a memory unit remote from the repair facility 110, or manufacturing facility 112, and the database B 104 is not connected directly to the Internet 114 or other network.

The databases 102-108 can be either in communication with each other, thus creating a virtual centralized repository, or the databases 102-108 can send and receive information to a physical centralized repository 100. The test data stored in the data repository 100 from the diagnostic procedure of the diagnostic tool 510, can then be associated with a diagnostic or repair step in the advanced diagnostic function diagnostic sequence during the authoring of that step or associated at another time or by another method. The information from the diagnostic tool 510 or computer 800 can be downloaded into the data repository 100, and then the information from any of the databases holding the pertinent information (102-108) or the data repository 100, can be the transmitted or uploaded into the diagnostic tool 510 or the personal computer 800.

Alternatively, the test requirement information can be pre-loaded into the memory of the diagnostic tool 510 or personal computer 800 before the authoring of the step and associated within the diagnostic tool 510 or computer 800, and then updated at a later time. In addition, the information of the diagnostic test results can be updated at anytime after authoring of the diagnostic sequence.

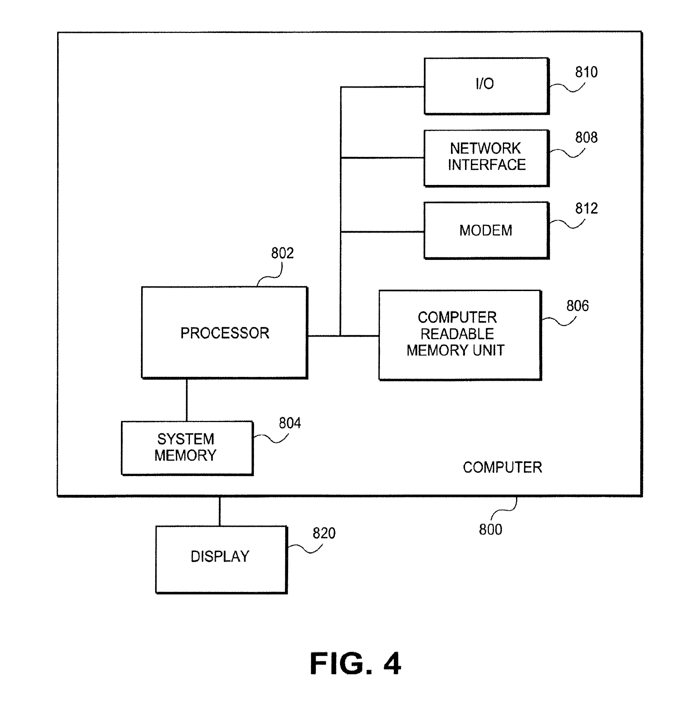

Referring to FIG. 4, an example of the computer 800 of FIG. 1, but not limited to this example of the computer 800, that can read computer readable media that includes computer-executable instructions of the disclosure. The computer 800 includes a processor 802 that uses the system memory 804 and a computer readable memory device 806 that includes certain computer readable recording media. A system bus connects the processor 802 to a network interface 808, modem 812 or other interface that accommodates a connection to another computer or network such as the Internet. The system bus may also include an input and output (I/O) interface 810 that accommodate connection to a variety of other devices. Furthermore, the computer 800 can output through, for example, the I/O 810, data for display on a display device 820.

The disclosure or parts thereof can be realized as computer-executable instructions in computer-readable media. The computer-readable media includes all possible kinds of media in which computer-readable data is stored or included or can include any type of data that can be read by a computer or a processing unit. The computer-readable media include for example and not limited to storing media, such as magnetic storing media (e.g., ROMs, floppy disks, hard disk, and the like), optical reading media (e.g., CD-ROMs (compact disc-read-only memory), DVDs (digital versatile discs), re-writable versions of the optical discs, and the like), hybrid magnetic optical disks, organic disks, system memory (read-only memory, random access memory), non-volatile memory such as flash memory or any other volatile or non-volatile memory, other semiconductor media, electronic media, electromagnetic media, infrared, and other communication media such as carrier waves (e.g., transmission via the Internet or another computer). Communication media generally embodies computer-readable instructions, data structures, program modules or other data in a modulated signal such as the carrier waves or other transportable mechanism including any information delivery media. Computer-readable media such as communication media may include wireless media such as radio frequency, infrared microwaves, and wired media such as a wired network. Also, the computer-readable media can store and execute computer-readable codes that are distributed in computers connected via a network. The computer readable medium also includes cooperating or interconnected computer readable media that are in the processing system or are distributed among multiple processing systems that may be local or remote to the processing system. The present disclosure can include the computer-readable medium having stored thereon a data structure including a plurality of fields containing data representing the techniques of the disclosure.

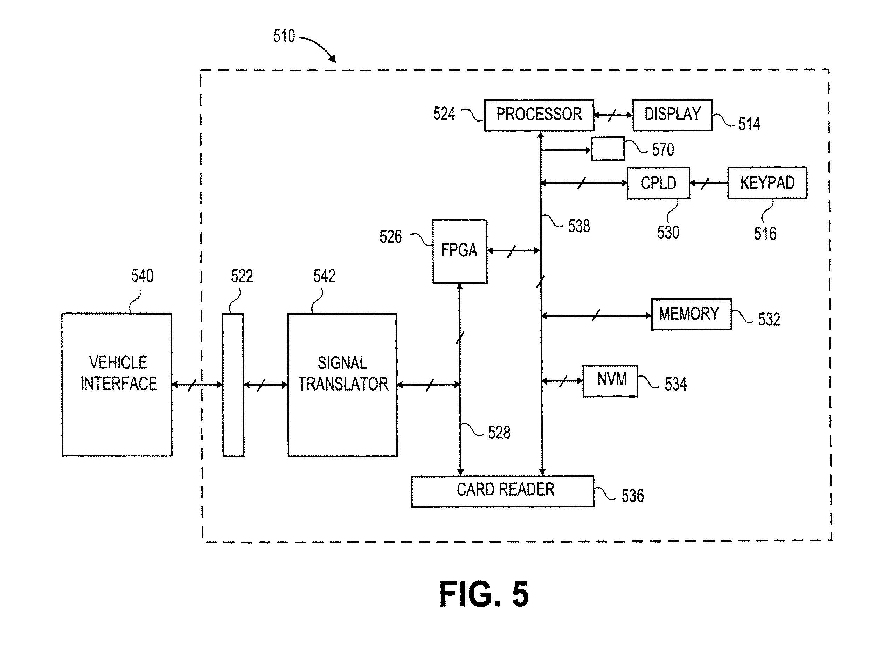

FIGS. 5, shows the details of the diagnostic tool 510 of FIG. 1. The diagnostic tool can utilize the DTC's from the onboard computer, and/or check for the vehicle health information. FIG. 5 is a block diagram of the components of a diagnostic tool 510. The diagnostic tool 510, according to an embodiment of the disclosure, includes a processor 524, a field programmable gate array (FPGA) 526, a first system bus 528, the display 514, a complex programmable logic device (CPLD) 530, the user interface 516 in the form of a keypad, a memory subsystem 532, an internal non-volatile memory (NVM) 534, a card reader 536, a second system bus 538, the connector interface 522, and a selectable signal translator 542. A vehicle communication interface 540 is in communication with the diagnostic tool 510 through connector interface 522 via an external cable. The connection between the vehicle communication interface 540 and the connector interface 522 can also be a wireless connection such as BLUETOOTH, infrared device, wireless fidelity (WiFi, *e*.*g*. 802.11), *etc*.

The selectable signal translator 542 communicates with the vehicle communication interface 540 through the connector interface 522. The signal translator 542 conditions signals received from a motor vehicle control unit through the vehicle communication interface 540 to a conditioned signal compatible with the diagnostic tool 510. The translator 542 can communicate with, for example, the communication protocols of J1850 signal, ISO 9141-2 signal, communication collision detection (CCD) (e.g., Chrysler collision detection), data communication links (DCL), serial communication interface (SCI), S/F codes, a solenoid drive, J1708, RS232, controller area network (CAN), or other communication protocols that are implemented in a vehicle.

The circuitry to translate a particular communication protocol can be selected by the FPGA 526 (e.g., by tri-stating unused transceivers) or by providing a keying device that plugs into the connector interface 522 that is provided by diagnostic tool 510 to connect diagnostic tool 510 to vehicle communication interface 540. Translator 542 is also coupled to FPGA 526 and the card reader 536 via the first system bus 528. FPGA 526 transmits to and receives signals (*i*.*e*., messages) from the motor vehicle control unit through the translator 542.

FPGA 526 is coupled to the processor 524 through various address, data and control lines by the second system bus 538. FPGA 526 is also coupled to the card reader 536 through the first system bus 528. Processor 524 is also coupled to the display 514 in order to output the desired information to the user. The processor 524 communicates with the CPLD 530 through the second system bus 538. Additionally, the processor 524 is programmed to receive input from the user through the user interface 516 via the CPLD 530. The CPLD 530 provides logic for decoding various inputs from the user of diagnostic tool 510 and also provides the glue-logic for various other interfacing tasks.

Memory subsystem 532 and internal non-volatile memory 534 are coupled to the second system bus 538, which allows for communication with the processor 524 and FPGA 526. Memory subsystem 532 can include an application dependent amount of dynamic random access memory (DRAM), a hard drive, and/or read only memory (ROM). Software to run the diagnostic tool 510 can be stored in the memory subsystem 532. The internal non-volatile memory 534 can be, but not limited to, an electrically erasable programmable read-only memory (EEPROM), flash ROM, or other similar memory. The internal non-volatile memory 534 can provide, for example, storage for boot code, self-diagnostics, various drivers and space for FPGA images, if desired. If less than all of the modules are implemented in FPGA 526, the non-volatile memory 534 can contain downloadable images so that FPGA 526 can be reconfigured for a different group of communication protocols.

Referring back to FIG 1, the vehicle 12 is shown connected to a personal computer 800 or a dedicated diagnostic tool 510. The connection can be via a vehicle communication interface. The first connection between vehicle 12 and the vehicle communication interface, and the second connection between the vehicle communication interface and the personal computer/diagnostic tool 800 and 510 can be either wired or wireless.

Applicable communications with the host, such as the vehicle 12 connected to the unit, can be maintained during all functions of the vehicle during diagnostics. The connections between the vehicle 12 and the diagnostic tool 510 or computer 800 can include a wired connection such as through a RS232 port, USB (Universal Serial Bus), Ethernet cable. However, the connections 410 and 510 can also be wireless using protocols such as BLUETOOTH, IEEE 802.11x, wireless USB, other types of wireless Ethernet protocols, etc.

The information cached from the diagnostics on the vehicle, stored on the data repository, can be displayed on the diagnostic tool 510 or personal computer 800 and can be outputted with or without the connection to the vehicle. The vehicle specific information can be inputted manually or automatically through a wired or wireless connection.

Although examples of the diagnostic system providing a database holding the data from the diagnostic tools accommodating mining of that information, other examples can also be made. For example, other information can be provided in advance of the diagnostic tests. The advanced information can used to support the diagnostic test, or the advance notice of the information can aid in the preparation for the test. A plurality of other methods can be used to analyze the information stored in the database.

The many features and advantages of the disclosure are apparent from the detailed specification, and thus, it is intended by the appended claims to cover all such features and advantages of the disclosure which fall within the true spirit and scope of the disclosure. Further, since numerous modifications and variations will readily occur to those skilled in the art, it is not desired to limit the disclosure to the exact construction and operation illustrated and described, and accordingly, all suitable modifications and equivalents may be resorted to, falling within the scope of the disclosure.

## Claims

1. A vehicle diagnostics system, comprising:
a means receiving and storing vehicle specific information, and storing diagnostic test sequences;
a means for a processor connected to the storing means, executing instructions for the diagnostic test sequences and outputting the results of the execution; and
a means for a centralized database, remote from the storing means, storing the results of the execution of the diagnostic test sequences and results of the execution of diagnostic tests from additional vehicles, configurable for extraction and linking of the data stored in the centralized database.

2. The system of claim 1, further comprised of a second processor means remote form the processor means, analyzing the data stored on the cenralized database means.

3. The diagnostic system of claim 1, further comprising a repair facility sending information for storage on the centralized database.

4. The diagnostic system of claim 1, further comprising storing information related to the diagnostic test sequences on the centralized database.

5. The diagnostic system of claim 1, further comprising storing information related to the diagnostic test sequences on the centralized database, where the related information being vehicle identity, geographical location of the operation of the vehicle, and maintenance history of the vehicle.

6. The diagnostic system of claim 1, further comprising the centralized database receiving facility location from the processor.

7. The system of claim 1, further comprising a second processor means executing a plurality of instructions determining the correlation between the information stored in the centralized database and inputted back into the storage means.

8. The system of claim 1, further comprising an output means connected to the processor, for identifying the data stored on the centralized database.

9. The system of claim 1, further comprising the centralized database including receiving diagnostic information from a plurality of diagnostic tools diagnosing a plurality of vehicles.

10. The system of claim 1, further comprising the centralized database being connected to a linking means for linking among the data stored on the centralized database for use by the processor.

11. A method for a vehicle diagnostics, comprising:
receiving and storing vehicle specific information, and storing diagnostic test sequences in a memory;
executing instructions for the diagnostic test sequences and outputting the results of the execution, by a processor connected to the memory; and
storing, in a centralized database remote from the memory, the results of the execution of the diagnostic test sequences and results of the execution of diagnostic tests from additional vehicles, configurable for extraction and linking of the data stored in the centralized database.

12. The method of claim 11, further comprised of analyzing the data stored on the database by a second processor remote from the first processor.

13. The method of claim 11, further comprising sending information for storage on the centralized database through a repair facility.

14. The method of claim 11, further comprising storing information related to the diagnostic test sequences on the centralized database.

15. The method of claim 11, further comprising storing information related to the diagnostic test sequences on the centralized database, where the related information being vehicle identity, geographical location of the operation of the vehicle, and maintenance history of the vehicle.

16. The method of claim 11, further comprising executing, by a second processor, a plurality of instructions determining the correlation between the information received in the centralized database from the processor and writing links between the information stored on the centralized database.

17. The method of claim 11, further comprising displaying the information stored on the centralized database and the linked information.
